# EUROPEAN PATENT SPECIFICATION

(11) **EP 2 568 309 B1**
(45) Date of publication and mention of the grant of the patent: **18.12.2013**
(21) Application number: 11180785.5
(22) Date of filing: 09.09.2011
(51) Int. Cl.: B61L 25/02, G01S 5/02, G01C 21/26, G08G 1/01

(54) **Method and apparatus for path determination**
Verfahren und Vorrichtung zur Pfadbestimmung
Procédé et appareil de détermination de chemin

(43) Date of publication of application: 13.03.2013
(73) Proprietor: NTT DoCoMo, Inc., Tokyo (JP)
(72) Inventor: Luther, Marko, 82256 Fürstenfeldbruck (DE)
(74) Representative: Betten & Resch

(56) References cited:
- US-A1- 2002 044 088
- US-A1- 2004 220 728
- Arvind Thiagarajan, Lenin Ravindranath, Katrina LaCurts, Sivan Toledo Jakob ErikssonSamuel Madden, Hari Balakrishnan: "VTrack: Accurate, Energy-aware Road Traffic Delay EstimationUsing Mobile Phones", , 1 January 2009 (2009-01-01), XP55017997, Retrieved from the Internet: URL:http://nms.lcs.mit.edu/papers/vtrack-c r-submission.pdf [retrieved on 2012-01-31]
- Zhixian Yan, Christine Parent, Stefano Spaccapietra and Dipanjan Chakraborty: "A Hybrid Model and Computing Platform for Spatio-semantic Trajectories", , 1 January 2010 (2010-01-01), XP55017999, Retrieved from the Internet: URL:http://www.springerlink.com/content/dm 45160577058346/fulltext.pdf [retrieved on 2012-01-31]
- Nadine Schuessler, Kay W. Axhausen: "Processing Raw Data from Global Positioning Systems Without Additional Information", , 30 July 2008 (2008-07-30), XP55018000, Retrieved from the Internet: URL:http://e-collection.library.ethz.ch/es erv/eth:30636/eth-30636-01.pdf [retrieved on 2012-01-31]

## Description

### FIELD OF INVENTION

The present invention relates to a method and an apparatus for path determination.

### BACKGROUND OF THE INVENTION

On mobile devices the quality and density of sensed location data is often limited by environmental circumstances (due to the landscape, weather, etc.), quality and availability of sensors as well as energy considerations. Because localization accuracy is at odds with energy consumption, often lower or dynamic sampling rates and less accurate sensors are used (like WIFI or CellID tracking over GPS) to limit energy consumption (GPS requires about 20x more energy than WIFI localization). Just connecting all low-quality location positions in sequence according to their (temporal) order results usually in paths that are much longer than the real path the sensed moving object took, and often contain sub paths that cannot correspond to any real movement of the object. In contrast, taking just the "best" measurements usually results in paths that are much shorter than the real path and are rather coarse. As consequence paths generated directly from sequences of raw position data cannot reliably be used to deduce derived data like the speed of the object at a point in time. This limits the performance of later processing steps that, for example, derive the start and end of trips (sometimes called episodes), i.e, the parts of the path an object was moving opposed to the stationary states, or the travel modality (by car, walking,..), based on the speed estimation.

The standard method to reconstruct paths from sequences of location data is to first remove outliers, i.e. position samples far from other neighbouring (in terms of observation time) samples resulting from systematic errors resulting for example from a low number of visible satellites in an GPS system. Those outliners have a devastating effect on many smoothing methods. Often a threshold-driven technique on velocity is applied to remove position samples that do not give a reasonable correlation with the expected velocity. That is, samples are removed if they imply an unrealistic high speed or acceleration values on the segments connecting to the previous and following samples (see e.g. A. Thiagarajan, L. Ravindranath, K. LaCurts, S. Madden, H. Balakirshnan, S. Toledo, and J. Eriksson. VTrack: accurate, energy-aware road traffic delay estimation using mobile phones. In Proceedings of 7th ACM Conferrence on Embedded Networked Sensor Systems (SenSys'09), 2009, or Z. Yan, C. Parent, S. Spaccapietra, and D. Chakraborty. A hybrid model and computing platform for spatio-semantic trajectories. In Proceedings of the Extended Semantic Web Conference (ESWC'2010), 2010).

In case altitude data is known for the data samples (which usually holds if gathered using GPS), thresholds on those are sometimes used to identify outliners (see e.g. N. Schuessler and K. W. Axhausen. Processing GPS raw data without additional information. Technical report, Eidgenössische Technische Hochschule, Institut für Verkehrsplanung und Transportsysteme, 2008).

After outlier removal it is standard to apply a window-based smoothing technique to minimize the effect of random errors for example caused by multi-path GPS signal reflection. Usually it is assumed that the given timestamps of the samples are correct and only the sampled positions are smoothed rather than the derived speed values. The most common smoothing technique is to apply a moving average (MA), also known as running median model based on the last samples and future samples within a time window applied to the x and y pane separately. A slightly better method is to apply the Gaussian kernel based local regression model to the values in the window. This can be seen as a variant of the MA method, which assigns larger weights to samples in the center of the window. A similar method is the least squares spline approximation technique that minimizes the residual sum of squared errors which can be improved by iterative application. Finally, a Kalman filter is frequently used to smooth navigational data taking velocities and process noise into account. The most important component of the Kalman filter is the assumed measurement error of the sensor, which determines the amount of random error that should be reduced. However, this measurement error is usually not constant, but varies with the environmental conditions. The modified Kalman filter takes the actual measurement error into account, e.g. in the GPS case the quality criteria is based on the number of satellites and PDOP values (see e.g. J. Jun, R. Guensler, and J. H. Ogle. Smoothing methods designed to minimize the impact of GPS random error on travel distance, speed and acceleration profile estimates. Geospatial Data Acquisition Technologies in Design and Construction, 2007).

All techniques discussed above are based on standard statistical filtering techniques configured and applied to the path reconstruction problem. As such they regard the sampled values as a stream of data and process the data in the order it was measured and most of them assume a constant measurement error. However, especially in the modern mobile location systems the measurements stem from different sensing methods like GPS or WIFI and therefore involve a wide error variance. The modified Kalman filter is the only known technique that takes the accuracy estimation within the data set into account that is usually available from mobile positioning systems like CellId tracking, WIFI or GPS. However, also the Kalman filter applies the processing in the order of the measurements, as all other techniques, and assumes a constant sampling rate.

However, in energy efficient sampling system there is often applied an adaptive rate (e.g. a higher sampling rate in urban areas and a lower one on highways). Moreover, in some cases it is not even possible to influence the exact moment of measurement and position samples are provided at irregular rates and stemming from different location sensing subsystems (GPS, WIFI, CeIIID tracking) with different error rates as for the location APIs of modem mobile OS like iOS or Android.

### SUMMARY OF THE INVENTION

The present invention is defined in the independent claims. The dependent claims define embodiments of the invention.

According to one embodiment there is provided a method for determining the path along which a mobile device has travelled based on a plurality of position measurements of said mobile device, wherein each position measurement has associated a measurement time at which said measurement was made and a corresponding measurement accuracy, said method comprising:
a) Selecting among said plurality of position measurements two position measurements, one as starting point and one as end point of said path;
b) selecting a position measurement among the position measurements which with respect to its measurement time lies between said selected starting point and said selected endpoint as a candidate for a third point of said path, said selection of said candidate being made such that a position measurement having a higher measurement accuracy is preferred over a position measurement having a lower accuracy;
c) performing a correction of the measured coordinates of said candidate such that the coordinates are moved towards the connecting line between said starting point and said endpoint to obtain corrected coordinates of said candidate;
d) choosing the corrected coordinates as the actual third point of said path.

By selecting the points of the travelling path based on the accuracy and by further performing a correction of the coordinates of the selected points, the overall accuracy of the determined travelling path can be improved, even if the quality of the sample measurement varies.

According to one embodiment said correction comprises:
based on the measurement time of said selected candidate and the speed of said mobile device, determining a hypothetical location at which said mobile device would be located on the connecting line between said starting point and said endpoint at the measurement time of said candidate;
choosing a point on the line connecting said hypothetical location and said candidate for a third point of said path as actual third point of said path.

With this approach the actually chosen point of the path on one hand takes into account the higher accuracy of the starting point and the endpoint, on the other hand it takes into account the accuracy of the candidate point and the speed of the mobile device. In this manner a good and informed choice for the actual point to be selected for the travelling path can be made.

According to one embodiment a) to d) are performed recursively using said chosen third point of said path as a new starting point or as a new endpoint.

In this manner the travelling path can be recursively determined.

According to one embodiment said actual third point is chosen based on taking into account the measurement accuracy of said candidate.

This is a suitable and advantageous way of choosing the actual third point by taking into account the accuracy of the measurement, which actually is lower than the one of the starting point and the endpoint.

According to one embodiment said actual third point is chosen such that it is located as close as possible to said hypothetical location while still lying within the measurement accuracy of said candidate.

This is a good compromise between the actual measurement and the fact that the measurement accuracy of the starting point and the endpoint is higher than the measurement accuracy of the candidate point.

According to one embodiment said actual third point is chosen based on taking into account the speed between said starting point and said endpoint. More specifically, according to one embodiment said speed is taken into account such that depending on the speed of the mobile device it is decided to which extent the chosen point may deviate from the direct line between said starting point and said endpoint.

In this way it can for example be taken into account that for high speed only a small deviation from the direct line between the starting point and the end point actually is realistic.

According to one embodiment said actual third point is chosen based on taking into account the speed between said starting point and said endpoint and the measurement accuracy of said candidate.

In this manner even more parameters may be taken into account when determining the actual third point.

According to one embodiment the speed of said mobile device is determined based on the measurement time of said starting point and the measurement time of said endpoint and the distance between them.

This is a convenient way of determining the speed of the mobile device.

According to one embodiment said two position measurements which are selected as a starting point as an end point, respectively, are selected such that none of the position measurement made at a time between said selected two position measurements have a higher accuracy than said selected two position measurements.

This is a suitable way of choosing the starting points for the algorithm.

According to one embodiment said plurality of position measurements result from at least two different measurement methods having respectively different accuracies.

This takes into account that the algorithm may be applied to a scenario where the sample measurements are resulting from different measurement methods having different accuracies.

According to one embodiment there is provided an apparatus for determining the path along which a mobile device has travelled based on a plurality of position measurements of said mobile device, wherein each position measurement has associated a measurement time at which said measurement was made and a corresponding measurement accuracy, said apparatus comprising:
a) a module for selecting among said plurality of position measurements two position measurements, one as starting point and one as end point of said path;
b) a module for selecting a position measurement among the position measurements which with respect to its measurement time lies between said selected starting point and said selected endpoint as a candidate for an third point of said path, said selection of said candidate being made such that a position measurement having a higher measurement accuracy is preferred over a position measurement having a lower accuracy;
c) a module for performing a correction of the measured coordinates of said candidate such that the coordinates are moved towards the connecting line between said starting point and said endpoint to obtain corrected coordinates of said candidate;
d) a module for choosing the corrected coordinates as the actual third point of said path.

This is a suitable way of implementing an apparatus according to an embodiment of the invention.

According to one embodiment the apparatus further comprises:
A module for performing a method according to one of the embodiments of the invention.

According to one embodiment there is provided a computer program comprising computer program code which when being executed on a computer enables said computer to perform a method according to one of the embodiments of the invention.

### BRIEF DESCRIPTION OF THE DRAWINGS

Fig. 1 schematically illustrates a travelling path and a set of sample measurements.
Fig. 2 illustrates the sample measurements of Fig. 1 together with their measurement accuracy.
Fig. 3 illustrates a path determining method according to an embodiment of the invention.
Fig. 4 illustrates a path determining method according to a further embodiment of the invention.

### DETAILED DESCRIPTION

First of all some terms which are used in the following description are explained.
GPS: Global Positioning System
WIFI: Wireless local area network based on the IEEE 802.11 standard
CeIIID tracking: positioning method based on the location of mobile phone base station equipment

According to one embodiment there is proposed a method which is able to improve low-quality paths stemming from raw location sensor data in a robust way and thus may increase the quality and coverage of service that are based on paths.

According to one embodiment there is provided a path reconstruction technique that has a geometric background instead of the usual statistical smoothing filters. According to one embodiment the principal idea is to start with the most accurate measurements in a given window, assuming those are correctly representing points on the path to be reconstructed. Then there are recursively added next most accurate measurements, and those measurements are "corrected" or "adjusted" by moving then to positions that are more likely corresponding to points of the original path based on information from the timestamps, accuracy and location of the previously added points before and after as well as the actual point to be added. In contrast to the traditional approaches summarized in the previous section, the present approach processes the measurements in an order based on accuracy of the measurements.

The proposed method has the advantage to be robust with respect to a large variation in position measurement accuracy as delivered by current mobile location APIs due to the involvement of a variety of different sensing technologies. This is because it takes the given accuracy of a certain measurement into account to when determining the order of processing. Moreover, also in the smoothing decision the accuracy is taken into account. In this way the proposed method is more informed by taking the information into account that is available in the given data set and which so far has not been used. The proposed method is also applicable to datasets with a variable sampling rate that is usually the consequence of energy efficient sampling strategies of mobile positioning systems. Finally, it supports the direct integration of additional speed estimations stemming from separate sensing equipment like a footpod or a bike-speed/cadence sensor.

In the following further embodiments of the invention will be described in somewhat more detail.

In the following example it is assumed that there is obtained a sequence of (a "set" of) positioning samples **d** ordered by respective timestamps, were each sample contains the following information:
- X-coordinate
- Y-coordinate
- Timestamp
- Accuracy given as a distance (radius around the position)
- Speed (optional)

The set of samples may be selected e.g. according to a certain time window, or just all existing samples which have been measured may be used. Alternatively, there may be chosen a geographic window (an area) and the set of samples then consists of the measurements falling into this area. The two criteria to determine the sample measurements may also be applied together, so that the sample measurements lie within a certain time window and within a certain geographic window. The task of the approach then is to determine a route or path which the mobile device has travelled for which the position measurements of the sample data have been obtained.

The data set may contain measurements from a wide variance of accuracy resulting from the integration of different sensing subsystems that deliver data in different environmental situations. E.g. in tunnels the GPS subsystem may not deliver any results, while the less accurate CeIIID tracking based subsystem might still estimate a location. It is further assumed that in one embodiment systematic errors have been already removed from the data set. For example, the first request of the actual position is usually answered by mobile location APIs with a rather imprecise sample, very quickly followed by more precise samples once the GPS subsystem catches a fix. In this case, it may be assumed that only the more precise measurement (from the GPS) remains in the data set after filtering of the systematic errors.

Based on the set of samples the proposed approach then determines a travelling path as will be described in the following.

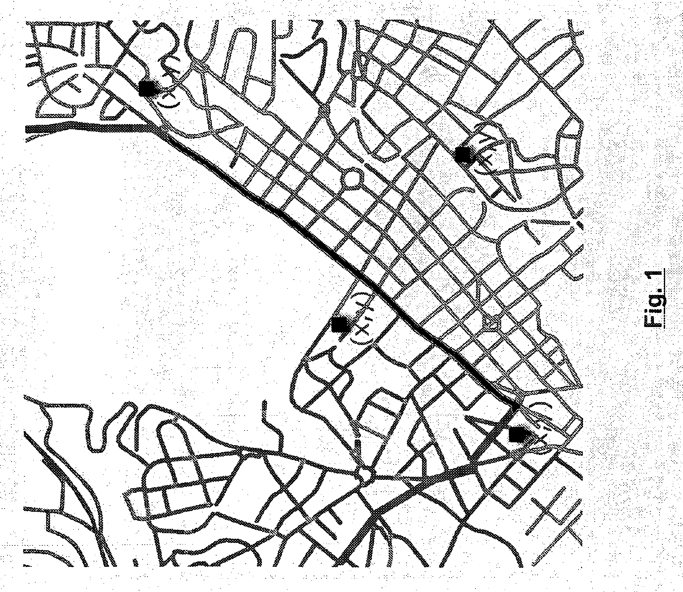

Fig. **1** illustrates the situation to which an embodiment of the present invention is applied. There is shown a map with streets (in light grey), and furthermore there is shown a dark, fat line which is the travelling path or the path along which the mobile device has actually travelled. Furthermore there are shown four position samples (x,y) which have been measured and based on which the travelling path is to be determined or reconstructed.

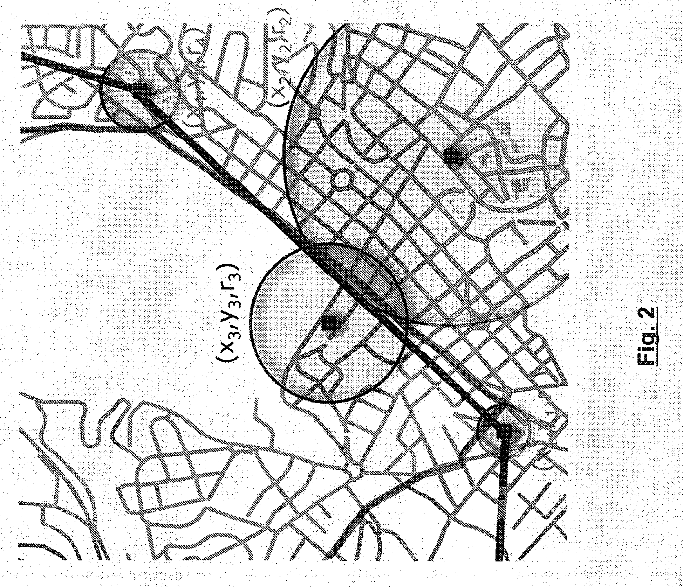

In Fig. 2 again the four measurements are shown, however, now together with their respective accuracy r. It can be seen that measurement 1 (x1, y1, r1) which is the first with respect to the time order is the most accurate measurement, the last measurement (x4, y4, r4) in the sequence of measurements is the second most accurate one, and the measurements which (with respect to measurement time) have been made between them are less accurate.

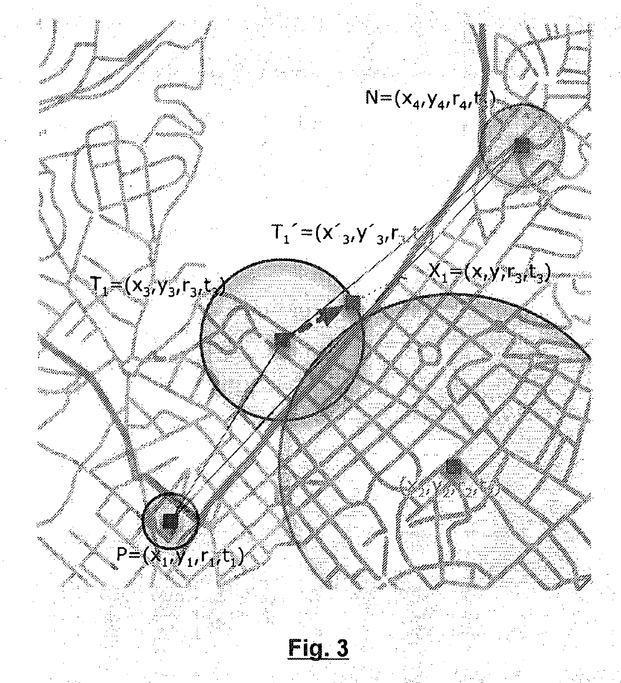

Using the sample measurements shown in Fig. 2 the path determination approach according to one embodiment will now be explained in connection with Fig. 3.

Assume that there is a set of **d** of sample measurements comprising in total a number of d sample measurements. In the present embodiment there are four measurements, the ones shown in Fig. 2, but this number is just exemplary.

Without loss of generality, one may assume that none of the measurements between the first (from now on referred to as **P** at index ***p***=0; d[0] = **P)** and the last positioning sample (from now on referred to as **N** at index *n*=(d-1); **d**[*n*] = **N**) with respect to their temporal order according to the given timestamps has a higher accuracy then **P** or **N.** The set d may e.g. be chosen accordingly from the available sample measurements. The coordinates of **P** and **N** (because no other sample measurements have a higher accuracy) are considered to reflect as much as possible the corresponding positions in the path to be reconstructed and are therefore immediately added to the result set, without any corrections or adjustment of their position.

Then the embodiment proceeds to select the next sample measurement to be added to the path to be determined. The next sample measurement to be added is selected based on a selection criterion c1, which is based on the measurement accuracy. Applying criterion c1 based on the measurement accuracy means that a position measurement having higher measurement accuracy is preferred over a position measurement having lower measurement accuracy. For that purpose in one embodiment according to criterion c1 the next best measurement **T₁** at index *t* of **d** to be added is selected from the subset of sample measurements which with respect to their measurement time lie between P and N, i.e. from the subset **d**[*p*+1:*n*-1]. If this subset is empty, because no measurement fulfilling the criterion can be found, then the process stops.

The criterion *c1* may in a very simple case mean that there is determined the next most accurate sample measurement in the subset and just select this sample measurement as next position candidate **T₁** for the route to be determined. This is illustrated in Fig. 3. The next most accurate measurement after **P** and **N** is (x3, y3, r3, t3), and this measurement is selected as the next candidate measurement **T₁** for determining the path.

If there are more than one sample measurements in the subset which have the same accuracy being most close to the accuracy of P and N, then the approach in one embodiment is to select from this given subset of **d** having the same measurement accuracy the one in the middle of this set with respect to the order of **d** (i.e. with respect to measurement time) as candidate **T₁**. This means that there is selected the measurement sample **T₁** which has the next highest accuracy after P and **N** and which with respect to measurement time lies as close as possible in the middle between P and N.

Another, more complex criterion *c1* may in one embodiment also try to balance the number of samples of the between **P** and **T₁**, and between **T₁** and **N**.

Once **T₁** is selected as a candidate point for the path, there is performed a correction or an adjustment of its measured coordinates. This is done in order to take into account that the measurement accuracy of the candidate point is less than the one of the points P and N. In view of this situation there is some likelihood that the measured coordinates of the candidate point are more far away from the direct connecting line between P and N than they actually should be in view of the actual and true travelling path of the mobile device. For this reason and to take this into account there is performed a correction that moves the measured coordinates of the sample measurement **T₁** towards the (direct) line which connects the measurements P and **N**. This results in a correction of its coordinates such that they more likely correspond to the path to be reconstructed.

In the following there will be explained in connection with Fig. 3 how this correction is performed according to one embodiment.

To perform the correction first a position **X₁** on the line between **P** and **N** is determined based on the temporal projection of **T.** That is, **X₁** marks the position on the line between **P** and **N** at the timestamp of **T₁**, taking the timestamps of **P** and **N** into account and assuming a constant speed. It should be noted that adding **X₁** to the path **P, N** would not result in any speed increase.

In a next step then there is determined the position **T₁'** on the line between **T₁** and **X₁** using a criterion c2 such that **T₁'** is the more likely position of the path to be reconstructed corresponding to **T₁**. The criterion c2 in one embodiment just takes the accuracy of **T₁** into account and moves **T₁** to the intersection between the line **T₁X** and the radius of **T₁** according to its accuracy. This approach for obtaining corrected coordinates for **T₁** is illustrated in Fig. 3, where the square at the radius which shows the accuracy of **T₁** is the corrected candidate **T₁'** which then is chosen as "actual third point" for the travelling path or path.

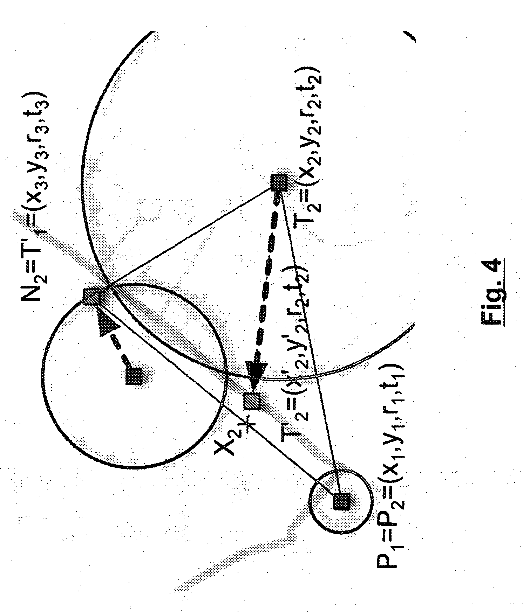

However, according to other embodiments more a complex criterion c2 may be applied as well for performing the correction. For example such a criterion c2 may take further attributes of **P, T₁** and **N** into account, for example by making the position of **T₁'**dependent on the speed between **P** and **N.** For example, there may be a rule or recipe which defines or prescribes how much the selected point **T₁'** may deviate from the direct line **T₁X**. For example, if the speed is relatively high or beyond some threshold, then the point **T₁'** may be chosen such that it even lies outside of the accuracy of **T₁,** closer to the direct line **T₁X.** It may even be decided to drop the corresponding measurement completely, depending on the speed between P and N, the deviation of the point **T₁'**from the line **T₁X,** and the measurement accuracy of **T₁'.** Fig. 4, which illustrates the next iteration step and which will be explained in the following, shows such a situation where such a case were the corrected candidate **T₂'** is positioned beyond the measurement range of the candidate **T₂.**

Finally, the method is recursively applied to the position samples **d**[*p*+1,*t*-1] on the left side of **T** and **d**[*t*+1,*n*-1] on the right side of T. This next iteration step is illustrated in Fig. 4. The starting point P of Fig. 3 now again is the starting point. However, in the iteration step shown in Fig. **4** the previously chosen actual third point **T₁'** now becomes the new endpoint **N₂**.

The next sample measurement chosen as the next candidate **T₂** then is the next accurate measurement, which is (x2, y2, r2, t2). Again then there is performed a correction of these coordinates which - as can be seen from Fig. 4 - results in a corrected point **T₂'** which lies beyond the accuracy radius of **T₂**.

The method then may proceed further by repeatedly and iteratively performing the steps as described before. According to one embodiment then the process terminates on empty subsets.

## Claims

1. A computer-implemented method for determining the path along which a mobile device has travelled based on a plurality of position measurements of said mobile device, wherein each position measurement has associated a measurement time at which said measurement was made and a corresponding measurement accuracy, said method comprising:
a) Selecting among said plurality of position measurements two position measurements, one as starting point and one as end point of said path, wherein said two position measurements which are selected as a starting point as an end point, respectively, are selected such that none of the position measurement made at a time between said selected two position measurements have a higher accuracy than said selected two position measurements;
b) selecting a position measurement among the position measurements which with respect to its measurement time lies between said selected starting point and said selected endpoint as a candidate for an third point of said path, said selection of said candidate being made such that a position measurement having a higher measurement accuracy is preferred over a position measurement having a lower accuracy;
c) performing a correction of the measured coordinates of said candidate such that the coordinates are moved towards the connecting line between said starting point and said endpoint to obtain corrected coordinates of said candidate, wherein said correction comprises:
based on the measurement time of said selected candidate and the speed of said mobile device, wherein the speed of said mobile device is determined based on the measurement time of said starting point and the measurement time of said endpoint and the distance between them, determining a hypothetical location at which said mobile device would be located on the connecting line between said starting point and said endpoint at the measurement time of said candidate;
choosing a point on the line connecting said hypothetical location and said candidate for a third point of said path as actual third point of said path;
d) choosing the corrected coordinates as the actual third point of said path

2. The method of claim 1, wherein said steps a) to d) are performed recursively using said chosen third point of said path as a new starting point or as a new endpoint.

3. The method of one of claims claim 1 to 2, wherein
said actual third point is chosen based on taking into account the measurement accuracy of said candidate.

4. The method of claim, wherein said actual third point is chosen such that it is located as close as possible to said hypothetical location while still lying within the measurement accuracy of said candidate.

5. The method of one of the preceding claims, wherein
said plurality of position measurements result from at least two different measurement methods having respectively different accuracies.

6. An apparatus for determining the path along which a mobile device has travelled based on a plurality of position measurements of said mobile device, wherein each position measurement has associated a measurement time at which said measurement was made and a corresponding measurement accuracy, said apparatus comprising:
a) a module for selecting among said plurality of position measurements two position measurements, one as starting point and one as end point of said path, wherein said two position measurements which are selected as a starting point as an end point, respectively, are selected such that none of the position measurement made at a time between said selected two position measurements have a higher accuracy than said selected two position measurements;
b) a module for selecting a position measurement among the position measurements which with respect to its measurement time lies between said selected starting point and said selected endpoint as a candidate for an third point of said path, said selection of said candidate being made such that a position measurement having a higher measurement accuracy is preferred over a position measurement having a lower accuracy;
c) a module for performing a correction of the measured coordinates of said candidate such that the coordinates are moved towards the connecting line between said starting point and said endpoint to obtain corrected coordinates of said candidate, wherein said correction comprises:
based on the measurement time of said selected candidate and the speed of said mobile device, wherein the speed of said mobile device is determined based on the measurement time of said starting point and the measurement time of said endpoint and the distance between them, determining a hypothetical location at which said mobile device would be located on the connecting line between said starting point and said endpoint at the measurement time of said candidate;
choosing a point on the line connecting said hypothetical location and said candidate for a third point of said path as actual third point of said path d) a module for choosing the corrected coordinates as the actual third point of said path.

7. The apparatus of claim 6, further comprising:
A module for performing the steps as defined in one of claims 3 to 5.

8. A computer program comprising computer program code which when being executed on a computer enables said computer to perform a method according to one of claims 1 to 5.

## Patentansprüche

1. Ein computerimplementiertes Verfahren zum Bestimmen des Pfades, entlang dem ein Mobilgerät gereist ist, basierend auf einer Mehrzahl von Positionsmessungen des Mobilgeräts, wobei jede Positionsmessung eine zugeordnete Messzeit aufweist, zu der die Messung durchgeführt wurde, sowie eine entsprechende Messgenauigkeit, wobei das Verfahren aufweist:
a) Auswählen von zwei Positionsmessungen unter der Mehrzahl von Positionsmessungen, eine als einen Startpunkt und eine als einen Endpunkt des Pfads, wobei die zwei Positionsmessungen, die jeweils als Startpunkt und als Endpunkt ausgewählt werden, so ausgewählt werden, dass keine der Positionsmessungen, die zu einer Zeit zwischen den ausgewählten zwei Positionsmessungen durchgeführt wurde, eine höhere Genauigkeit als die zwei ausgewählten Positionsmessungen aufweist;
b) Auswählen einer Positionsmessung unter den Positionsmessungen, die bezüglich ihrer Messzeit zwischen dem ausgewählten Startpunkt und dem ausgewählten Endpunkt liegen, als ein Kandidat für einen dritten Punkt des Pfades, wobei die Auswahl des Kandidaten so durchgeführt wird, dass eine Positionsmessung mit einer höheren Messgenauigkeit bevorzugt wird über eine Positionsmessung mit einer niedrigeren Messgenauigkeit;
c) Durchführen einer Korrektur der gemessenen Koordinaten des Kandidaten derart, dass die Koordinaten in Richtung der Verbindungslinie zwischen dem Startpunkt und dem Endpunkt bewegt werden, um korrigierte Koordinaten des Kandidaten zu erhalten, wobei die Korrektur aufweist:
Basierend auf der Messzeit des ausgewählten Kandidaten und der Geschwindigkeit des Mobilgeräts, wobei die Geschwindigkeit des Mobilgeräts ermittelt wird basierend auf der Messzeit des Startpunkts und der Messzeit des Endpunkts und der Distanz zwischen beiden, Ermitteln einer hypothetischen Lokation, an der das Mobilgerät auf der Verbindungslinie zwischen dem Startpunkt und dem Endpunkt zu der Messzeit des Kandidaten lokalisiert wäre;
Auswählen eines Punktes auf der Linie, die die hypothetische Lokation und den Kandidaten für einen dritten Punkt des Pfades verbindet, als tatsächlichen dritten Punkt des Pfades;
d) Auswählen der korrigierten Koordinaten als den tatsächlichen dritten Punkt des Pfades.

2. Das Verfahren nach Anspruch 1, wobei die Schritte a) bis d) rekursiv durchgeführt werden unter Verwendung des ausgewählten dritten Punktes des Pfades als neuer Startpunkt oder als ein neuer Endpunkt.

3. Das Verfahren nach einem der Ansprüche 1 oder 2, wobei
der tatsächliche dritte Punkt ausgewählt wird basierend auf der Berücksichtigung der Messgenauigkeit des Kandidaten.

4. Das Verfahren nach Anspruch , wobei der tatsächliche dritte Punkt derart ausgewählt wird, dass er so nahe wie möglich an der hypothetischen Lokation liegt, während der noch immer innerhalb der Messgenauigkeit des Kandidaten liegt.

5. Das Verfahren nach einem der vorhergehenden Ansprüche, wobei
die Mehrzahl von Positionsmessungen resultiert aus zumindest zwei unterschiedlichen Messverfahren mit jeweils unterschiedlichen Genauigkeiten.

6. Eine Vorrichtung zum Ermitteln des Pfades, entlang dem ein Mobilgerät gereist ist, basierend auf einer Mehrzahl von Positionsmessungen des Mobilgeräts, wobei jede Positionsmessung eine zugeordnete Messzeit, bei der die Messung durchgeführt wurde, und eine zugeordnete Messgenauigkeit aufweist, wobei die Vorrichtung aufweist:
a) Ein Modul zum Auswählen von zwei Positionsmessungen unter der Mehrzahl von Positionsmessungen, eine als einen Startpunkt und eine als einen Endpunkt des Pfads, wobei die zwei Positionsmessungen, die jeweils als Startpunkt und als Endpunkt ausgewählt werden, so ausgewählt werden, dass keine der Positionsmessungen, die zu einer Zeit zwischen den ausgewählten zwei Positionsmessungen durchgeführt wurde, eine höhere Genauigkeit als die zwei ausgewählten Positionsmessungen aufweist;
b) ein Modul zum Auswählen einer Positionsmessung unter den Positionsmessungen, die bezüglich ihrer Messzeit zwischen dem ausgewählten Startpunkt und dem ausgewählten Endpunkt liegen, als ein Kandidat für einen dritten Punkt des Pfades, wobei die Auswahl des Kandidaten so durchgeführt wird, dass eine Positionsmessung mit einer höheren Messgenauigkeit bevorzugt wird über eine Positionsmessung mit einer niedrigeren Messgenauigkeit;
c) ein Modul zum Durchführen einer Korrektur der gemessenen Koordinaten des Kandidaten derart, dass die Koordinaten in Richtung der Verbindungslinie zwischen dem Startpunkt und dem Endpunkt bewegt werden, um korrigierte Koordinaten des Kandidaten zu erhalten, wobei die Korrektur aufweist:
Basierend auf der Messzeit des ausgewählten Kandidaten und der Geschwindigkeit des Mobilgeräts, wobei die Geschwindigkeit des Mobilgeräts ermittelt wird basierend auf der Messzeit des Startpunkts und der Messzeit des Endpunkts und der Distanz zwischen beiden, Ermitteln einer hypothetischen Lokation, an der das Mobilgerät auf der Verbindungslinie zwischen dem Startpunkt und dem Endpunkt zu der Messzeit des Kandidaten lokalisiert wäre;
Auswählen eines Punktes auf der Linie, die die hypothetische Lokation und den Kandidaten für einen dritten Punkt des Pfades verbindet, als tatsächlichen dritten Punkt des Pfades;
d) ein Modul zum Auswählen der korrigierten Koordinaten als den tatsächlichen dritten Punkt des Pfades.

7. Die Vorrichtung nach Anspruch 6, ferner aufweisend:
Ein Modul zum Durchführen der Schritte wie definiert in einem der Ansprüche 3 bis 5.

8. Ein Computerprogramm aufweisend Computerprogrammcode, der, wenn er auf einem Computer ausgeführt wird, den Computer in die Lage versetzt, ein Verfahren gemäß einem der Ansprüche 1 bis 5 auszuführen.

## Revendications

1. Procédé implémenté par ordinateur destiné à déterminer le chemin le long duquel un dispositif mobile s'est déplacé en se basant sur une pluralité de mesures de position dudit dispositif mobile, dans lequel chaque mesure de position a associé un moment de mesure auquel ladite mesure a été effectuée et une précision de mesure correspondante, ledit procédé comprenant :
a) la sélection parmi ladite pluralité de mesures de position de deux mesures de position, l'une comme point de départ et l'autre comme point d'arrivée dudit chemin, où lesdites deux mesures de position qui sont sélectionnées comme point de départ et comme point d'arrivée, respectivement, sont sélectionnées de sorte qu'aucune des mesures de position effectuées à un moment entre lesdites deux mesures de position sélectionnées n'ait une précision supérieure auxdites deux mesures de position sélectionnées ;
b) la sélection d'une mesure de position parmi les mesures de position qui, par rapport à son moment de mesure se trouve entre ledit point de départ sélectionné et ledit point d'arrivée sélectionné, en tant que candidate pour un troisième point dudit chemin, ladite sélection de ladite candidate étant effectuée de sorte qu'une mesure de position ayant une précision de mesure supérieure est préférée à une mesure de position ayant une précision inférieure ;
c) la réalisation d'une correction des coordonnées mesurées de ladite candidate de sorte que les coordonnées sont déplacées vers la droite reliant ledit point de départ et ledit point d'arrivée afin d'obtenir des coordonnées corrigées de ladite candidate, où ladite correction comprend :
en se basant sur le moment de mesure de ladite candidate sélectionnée et la vitesse dudit dispositif mobile, où la vitesse dudit dispositif mobile est déterminée en se basant sur le moment de mesure dudit point de départ et le moment de mesure dudit point d'arrivée et la distance entre eux, la détermination d'un emplacement hypothétique au niveau duquel ledit dispositif mobile serait situé sur la droite reliant ledit point de départ et ledit point d'arrivée au moment de mesure de ladite candidate ;
le choix d'un point sur la droite reliant ledit emplacement hypothétique et ladite candidate pour un troisième point dudit chemin en tant que troisième point réel dudit chemin ;
d) le choix des coordonnées corrigées en tant que troisième point réel dudit chemin.

2. Procédé selon la revendication 1, dans lequel lesdites étapes a) à d) sont réalisées de façon récurrente en utilisant ledit troisième point choisi dudit chemin comme nouveau point de départ ou comme nouveau point d'arrivée.

3. Procédé selon l'une des revendications 1 à 2, dans lequel
ledit troisième point réel est choisi en se basant sur la prise en compte de la précision de mesure de ladite candidate.

4. Procédé selon la revendication , dans lequel ledit troisième point réel est choisi de sorte qu'il est situé aussi près que possible dudit emplacement hypothétique tout en se trouvant toujours dans la précision de mesure de ladite candidate.

5. Procédé selon l'une des revendications précédentes, dans lequel
ladite pluralité de mesures de position résulte d'au moins deux procédés de mesure différents ayant respectivement des précisions différentes.

6. Appareil de détermination du chemin le long duquel un dispositif mobile s'est déplacé en se basant sur une pluralité de mesures de position dudit dispositif mobile, dans lequel chaque mesure de position a associé un moment de mesure auquel ladite mesure a été effectuée et une précision de mesure correspondante, ledit appareil comprenant :
a) un module destiné à sélectionner parmi ladite pluralité de mesures de position deux mesures de position, l'une comme point de départ et l'autre comme point d'arrivée dudit chemin, où lesdites deux mesures de position qui sont sélectionnées comme point de départ et comme point d'arrivée, respectivement, sont sélectionnées de sorte qu'aucune des mesures de position effectuées à un moment entre lesdites deux mesures de position sélectionnées n'ait une précision supérieure auxdites deux mesures de position sélectionnées ;
b) un module destiné à sélectionner une mesure de position parmi les mesures de position qui, par rapport à son moment de mesure se trouve entre ledit point de départ sélectionné et ledit point d'arrivée sélectionné, en tant que candidate pour un troisième point dudit chemin, ladite sélection de ladite candidate étant effectuée de sorte qu'une mesure de position ayant une précision de mesure supérieure est préférée à une mesure de position ayant une précision inférieure ;
c) un module destiné à réaliser une correction des coordonnées mesurées de ladite candidate de sorte que les coordonnées sont déplacées vers la droite reliant ledit point de départ et ledit point d'arrivée afin d'obtenir des coordonnées corrigées de ladite candidate, où ladite correction comprend :
en se basant sur le moment de mesure de ladite candidate sélectionnée et la vitesse dudit dispositif mobile, où la vitesse dudit dispositif mobile est déterminée en se basant sur le moment de mesure dudit point de départ et le moment de mesure dudit point d'arrivée et la distance entre eux, la détermination d'un emplacement hypothétique au niveau duquel ledit dispositif mobile serait situé sur la droite reliant ledit point de départ et ledit point d'arrivée au moment de mesure de ladite candidate ;
le choix d'un point sur la droite reliant ledit emplacement hypothétique et ladite candidate pour un troisième point dudit chemin en tant que troisième point réel dudit chemin ;
d) un module destiné à choisir les coordonnées corrigées en tant que troisième point réel dudit chemin.

7. Appareil selon la revendication 6, comprenant en outre :
un module destiné à réaliser les étapes telles que définies dans l'une des revendications 3 à 5.

8. Programme informatique comprenant un code de programme informatique qui, lorsqu'il est exécuté sur un ordinateur, permet audit ordinateur de réaliser un procédé selon l'une des revendications 1 à 5.
